# EUROPÄISCHE PATENTANMELDUNG

(11) **EP 2 782 091 A1**
(43) Veröffentlichungstag der Anmeldung: **24.09.2014**
(21) Anmeldenummer: 13003161.0
(22) Anmeldetag: 21.06.2013
(51) Int. Cl.: G09G 3/34, G09F 13/00

(54) **Schaltung zum Betreiben einer Verkehrsschild-Einrichtung mit solarbetriebener Beleuchtung**

(30) Priorität: 21.03.2013 DE 102013102905
(71) Anmelder: Fietkau, Jürgen, 89075 Ulm (DE); Borst, Matthias, 89075 Ulm (DE)
(72) Erfinder: Fietkau, Jürgen, 89075 Ulm (DE); Borst, Matthias, 89075 Ulm (DE)
(74) Vertreter: Kiessling, Christian

(57) **Zusammenfassung**

Bei einer mit einem Lichtsensor gekoppelte MikroprozessorSchaltung zum Steuern sowohl eines Einschaltvorgangs als auch eines Ausschaltvorgangs der Leuchtelemente einer Verkehrsschild-Einrichtung mit einem Basispaneel mit einer mit einer grafischen Gestaltung gemäß einer genormten Vorgabe der STVO versehenen Oberfläche, im Bereich derer die Leuchtelemente sowie der Lichtsensor untergebracht sind, wobei das Basispaneel mit einem Chassis verbunden ist, dessen Oberfläche mindestens teilweise mit Photovoltaik-Elementen zum Erzeugen von elektrischem Strom bei Tageslicht versehen ist und in dessen Inneren eine mit den Photovoltaik-Elementen elektrisch verbundene Stromspeicher-Einrichtung zur elektrischen Versorgung des Lichtsensors, der Leuchtelemente und der MikroprozessorSchaltung untergebracht ist, wird ein sicherer Betrieb sowie ein geminderter Stromverbrauch einer solarbetriebenen und mit Leucht-Elementen versehenen Verkehrsschilder-Einrichtung bei gegenüber den bekannten Mikroprozessor-Schaltungen dadurch erreicht, dass die MikroprozessorSchaltung ausgelegt ist, um bei Unterschreiten eines vorgegebenen Helligkeitswertes seitens des von dem Lichtsensor gemessenen ambienten Tageslichtes einen Einschaltvorgang der Leuchtelemente auszulösen und bei Überschreiten des vorgegebenen Helligkeitswertes seitens des von dem Lichtsensor gemessenen ambienten Tageslichtes einen Ausschaltvorgang der Leuchtelemente zu bewirken.

## Beschreibung

Die Erfindung betrifft eine mit einem Lichtsensor und/oder mit einer Zeitgeber-Einrichtung gekoppelte Mikroprozessor-Schaltung zum Steuern sowohl eines Einschaltvorgangs als auch eines Ausschaltvorgangs der Leuchtelemente einer Verkehrsschild-Einrichtung mit einem Basispaneel mit einer mit einer grafischen Gestaltung gemäß einer genormten Vorgabe der STVO versehenen Oberfläche, im Bereich derer die Leuchtelemente sowie der Lichtsensor untergebracht sind, wobei das Basispaneel mit einem Chassis verbunden ist, dessen Oberfläche mindestens teilweise mit Photovoltaik-Elementen zum Erzeugen von elektrischem Strom bei Tageslicht versehen ist und in dessen Inneren eine mit den Photovoltaik-Elementen elektrisch verbundene Stromspeicher-Einrichtung zur elektrischen Versorgung des Lichtsensors, der Leuchtelemente und der Mikroprozessor-Schaltung untergebracht ist.

Mikroprozessor-Schaltungen der eingangs genannten Art werden im Stand der Technik verwendet, um den Betrieb autonom aufstellbarer, vom allgemeinen Stromnetz unabhängiger, solarbetriebener und mit Leucht-Elementen versehener Verkehrsschilder-Einrichtungen zu steuern. Die bekannten Mikroprozessor-Schaltungen weisen indes den Nachteil auf, dass der Stromverbrauch bei einer sicheren Steuerung hoch ist, wodurch die Einsatzmöglichkeiten begrenzt sind.

Aufgabe der Erfindung ist es deshalb, eine Mikroprozessor-Schaltung zu schaffen, mittels derer ein sicherer Betrieb einer solarbetriebenen und mit Leucht-Elementen versehenen Verkehrsschilder-Einrichtung bei gegenüber den bekannten Mikroprozessor-Schaltungen gemindertem Stromverbrauch ermöglicht ist.

Für eine Mikroprozessor-Schaltung der eingangs genannten Art mit Lichtsensor wird diese Aufgabe gemäß einem ersten Aspekt der vorliegenden Erfindung dadurch gelöst, dass die Mikroprozessor-Schaltung ausgelegt ist, um bei Unterschreiten eines vorgegebenen Helligkeitswertes seitens des von dem Lichtsensor gemessenen ambienten Tageslichtes einen Einschaltvorgang der Leuchtelemente auszulösen und bei Überschreiten des vorgegebenen Helligkeitswertes seitens des von dem Lichtsensor gemessenen ambienten Tageslichtes einen Ausschaltvorgang der Leuchtelemente zu bewirken.

Für eine Mikroprozessor-Schaltung der eingangs genannten Art mit Zeitgeber-Einrichtung wird diese Aufgabe gemäß einem zweiten Aspekt der vorliegenden Erfindung dadurch gelöst, dass die Mikroprozessor-Schaltung ausgelegt ist, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen.

Bevorzugte Ausführungsformen der Erfindung sind Gegenstand der Unteransprüche der jeweils unabhängigen Schutzansprüche.

Bei der erfindungsgemäßen Mikroprozessor-Schaltung wird durch die Merkmalskombination, dass die Mikroprozessor-Schaltung ausgelegt ist, um bei Unterschreiten eines vorgegebenen Helligkeitswertes seitens des von dem Lichtsensor gemessenen ambienten Tageslichtes einen Einschaltvorgang der Leuchtelemente auszulösen und bei Überschreiten des vorgegebenen Helligkeitswertes seitens des von dem Lichtsensor gemessenen ambienten Tageslichtes einen Ausschaltvorgang der Leuchtelemente zu bewirken, erreicht, dass die Zeitdauer eines Betriebs der Leuchtelemente auf die gegebenen Lichtverhältnissen anpassbar ist und entsprechend minimiert werden kann, um der Stromspeicher-Einrichtung möglichst wenig elektrischen Strom zu entziehen.

Dem gegenüber wird durch die Merkmalskombination des zweiten Aspektes der vorliegenden Erfindung, dass die Mikroprozessor-Schaltung ausgelegt ist, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen, eine einfache Handhabung einer Verkehrsschild-Einrichtung erreicht, wobei diese Merkmale sich mit den Merkmalen des ersten Aspektes der vorliegenden Erfindung kombinieren lassen.

Gemäß einer ersten bevorzugten Ausführungsform der erfindungsgemäßen Mikroprozessor-Schaltung gemäß erstem Aspekt ist vorgesehen, dass zusätzlich eine Zeitgeber-Einrichtung vorgesehen ist, die im Nachgang zu einem Einschaltvorgang der Leuchtelemente die Dauer eines Überschreitens des von dem Lichtsensor sensierten vorgebbaren Helligkeitswertes misst, wobei die Mikroprozessor-Schaltung ausgelegt ist, um einen Ausschaltvorgang der Leuchtelemente nur dann zu bewirken, wenn die gemessene Dauer eines Überschreiten des von dem Lichtsensor sensierten vorgebbaren Helligkeitswertes länger als eine vorherbestimmte Zeitdauer bemessen ist.

Die vorherbestimmte Zeitdauer ist vorzugsweise einstellbar und dabei insbesondere auf zwischen 10 Sekunden und 100 Sekunden bemessbar.

Gemäß einer weiteren bevorzugten Ausführungsform der erfindungsgemäßen Mikroprozessor-Schaltung gemäß erstem Aspekt ist vorgesehen, dass zusätzlich eine Zeitgeber-Einrichtung vorgesehen ist, die im Nachgang zu einem Einschaltvorgang der Leuchtelemente den Lichtsensor ansteuert, um in konstanten Zeitabständen eine vorherbestimmte Anzahl diskreter Helligkeitswerte zu ermitteln, und eine Mittelwertbildung über eine Mehrzahl der so ermittelten Helligkeitswerte erfolgt, wobei die Mikroprozessor-Schaltung ausgelegt ist, um einen Ausschaltvorgang der Leuchtelemente nur dann zu bewirken, wenn ein jeweiliger Helligkeitsmittelwert höher ist als der vorgegebene Helligkeitswert.

Gemäß einer wichtigen bevorzugten Ausführungsform der erfindungsgemäßen Mikroprozessor-Schaltung gemäß erstem Aspekt ist zusätzlich eine Zeitgeber-Einrichtung vorgesehen, wobei die Mikroprozessor-Schaltung ausgelegt ist, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen, und zusätzlich ausgelegt ist, um abhängig von den Vorgaben des Lichtsensors den Beginn des Zeitfensters bei Unterschreiten eines vorgegebenen Helligkeitswertes seitens des von dem Lichtsensor gemessenen ambienten Tageslichtes vorzuverlegen und einen Einschaltvorgang auszulösen.

Gemäß einer weiteren wichtigen bevorzugten Ausführungsform der erfindungsgemäßen Mikroprozessor-Schaltung gemäß erstem Aspekt ist ebenfalls zusätzlich eine Zeitgeber-Einrichtung vorgesehen, und die Mikroprozessor-Schaltung ist ausgelegt, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen, und ist zusätzlich ausgelegt, um abhängig von den Vorgaben des Lichtsensors das Ende des Zeitfensters bei Unterschreiten eines vorgegebenen Helligkeitswertes seitens des von dem Lichtsensor gemessenen ambienten Tageslichtes zu verzögern und einen Ausschaltvorgang erst dann auszulösen, wenn der sensierte Helligkeitswert den vorgegebenen Helligkeitswertes übertrifft.

Gemäß einer ersten bevorzugten Ausführungsform der erfindungsgemäßen Mikroprozessor-Schaltung gemäß zweitem Aspekt ist vorgesehen, dass Anfang und Zeitdauer des Zeitfensters einstellbar sind.

Die Zeitdauer des Zeitfensters ist vorzugsweise auf zwischen 4 Stunden und 14 Stunden einstellbar.

Die erfindungsgemäße Mikroprozessor-Schaltung wird im Folgenden anhand einer bevorzugten Ausführungsform erläutert:
Die bevorzugte Ausführungsform der mit einem Lichtsensor gekoppelten erfindungsgemäßen Mikroprozessor-Schaltung ist zum Steuern sowohl eines Einschaltvorgangs als auch eines Ausschaltvorgangs der Leuchtelemente einer Verkehrsschild-Einrichtung ausgelegt, wobei die Verkehrsschild-Einrichtung ein Basispaneel mit einer mit einer grafischen Gestaltung gemäß einer genormten Vorgabe der STVO versehenen Oberfläche enthält, im Bereich derer die Leuchtelemente sowie der Lichtsensor untergebracht sind, wobei das Basispaneel mit einem Chassis verbunden ist, dessen Oberfläche mindestens teilweise mit Photovoltaik-Elementen zum Erzeugen von elektrischem Strom bei Tageslicht versehen ist und in dessen Inneren eine mit den Photovoltaik-Elementen elektrisch verbundene Stromspeicher-Einrichtung zur elektrischen Versorgung des Lichtsensors, der Leuchtelemente und der Mikroprozessor-Schaltung untergebracht ist.

Die erfindungsgemäße Mikroprozessor-Schaltung ist dabei ausgelegt, um bei Unterschreiten eines vorgegebenen Helligkeitswertes seitens des von dem Lichtsensor gemessenen ambienten Tageslichtes einen Einschaltvorgang der Leuchtelemente auszulösen und bei Überschreiten des vorgegebenen Helligkeitswertes seitens des von dem Lichtsensor gemessenen ambienten Tageslichtes einen Ausschaltvorgang der Leuchtelemente zu bewirken.

Die Mikroprozessor-Schaltung ist mit einer Zeitgeber-Einrichtung gekoppelt, die im Nachgang zu einem Einschaltvorgang der Leuchtelemente die Dauer eines Überschreitens des von dem Lichtsensor sensierten vorgebbaren Helligkeitswertes misst, wobei die Mikroprozessor-Schaltung ausgelegt ist, um einen Ausschaltvorgang der Leuchtelemente nur dann zu bewirken, wenn die gemessene Dauer eines Überschreiten des von dem Lichtsensor sensierten vorgebbaren Helligkeitswertes länger als eine vorherbestimmte Zeitdauer bemessen ist.

Die vorherbestimmte Zeitdauer ist einstellbar und im vorliegenden Fall auf 30 Sekunden bemessen.

Die Mikroprozessor-Schaltung ist des Weiteren ausgelegt, um im Zusammenwirken mit der zusätzlichen Zeitgeber-Einrichtung zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen, um abhängig von den Vorgaben des Lichtsensors den Beginn des Zeitfensters bei Unterschreiten eines vorgegebenen Helligkeitswertes seitens des von dem Lichtsensor gemessenen ambienten Tageslichtes vorzuverlegen und einen Einschaltvorgang auszulösen, und um abhängig von den Vorgaben des Lichtsensors das Ende des Zeitfensters bei Unterschreiten eines vorgegebenen Helligkeitswertes seitens des von dem Lichtsensor gemessenen ambienten Tageslichtes zu verzögern und einen Ausschaltvorgang erst dann auszulösen, wenn der sensierte Helligkeitswert den vorgegebenen Helligkeitswertes übertrifft.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einem Lichtsensor gekoppelte Mikroprozessor-Schaltung zum Steuern sowohl eines Einschaltvorgangs als auch eines Ausschaltvorgangs der Leuchtelemente einer Verkehrsschild-Einrichtung mit einem Basispaneel mit einer mit einer grafischen Gestaltung gemäß einer genormten Vorgabe der STVO versehenen Oberfläche, im Bereich derer die Leuchtelemente sowie der Lichtsensor untergebracht sind, wobei das Basispaneel mit einem Chassis verbunden ist, dessen Oberfläche mindestens teilweise mit Photovoltaik-Elementen zum Erzeugen von elektrischem Strom bei Tageslicht versehen ist und in dessen Inneren eine mit den Photovoltaik-Elementen elektrisch verbundene Stromspeicher-Einrichtung zur elektrischen Versorgung des Lichtsensors, der Leuchtelemente und der Mikroprozessor-Schaltung untergebracht ist, **dadurch gekennzeichnet, dass** die Mikroprozessor-Schaltung ausgelegt ist, um bei Unterschreiten eines vorgegebenen Helligkeitswertes seitens des von dem Lichtsensor gemessenen ambienten Tageslichtes einen Einschaltvorgang der Leuchtelemente auszulösen und bei Überschreiten des vorgegebenen Helligkeitswertes seitens des von dem Lichtsensor gemessenen ambienten Tageslichtes einen Ausschaltvorgang der Leuchtelemente zu bewirken.

2. Mikroprozessor-Schaltung nach Anspruch 1, **dadurch gekennzeichnet, dass** zusätzlich eine Zeitgeber-Einrichtung vorgesehen ist, die im Nachgang zu einem Einschaltvorgang der Leuchtelemente die Dauer eines Überschreitens des von dem Lichtsensor sensierten vorgebbaren Helligkeitswertes misst, wobei die Mikroprozessor-Schaltung ausgelegt ist, um einen Ausschaltvorgang der Leuchtelemente nur dann zu bewirken, wenn die gemessene Dauer eines Überschreiten des von dem Lichtsensor sensierten vorgebbaren Helligkeitswertes länger als eine vorherbestimmte Zeitdauer bemessen ist.

3. Mikroprozessor-Schaltung nach einem der vorhergehenden Ansprüche, **dadurch gekennzeichnet, dass** die vorherbestimmte Zeitdauer einstellbar ist.

4. Mikroprozessor-Schaltung nach einem der Ansprüche 2 und 3, **dadurch gekennzeichnet, dass** die vorherbestimmte Zeitdauer auf zwischen 10 Sekunden und 100 Sekunden bemessen ist.

5. Mikroprozessor-Schaltung nach Anspruch 1, **dadurch gekennzeichnet, dass** zusätzlich eine Zeitgeber-Einrichtung vorgesehen ist, die im Nachgang zu einem Einschaltvorgang der Leuchtelemente den Lichtsensor ansteuert, um in konstanten Zeitabständen eine vorherbestimmte Anzahl diskreter Helligkeitswerte zu ermitteln, und eine Mittelwertbildung über eine Mehrzahl der so ermittelten Helligkeitswerte erfolgt, wobei die Mikroprozessor-Schaltung ausgelegt ist, um einen Ausschaltvorgang der Leuchtelemente nur dann zu bewirken, wenn ein jeweiliger Helligkeitsmittelwert höher ist als der vorgegebene Helligkeitswert.

6. Mikroprozessor-Schaltung nach einem der Ansprüche 1 bis 5, **dadurch gekennzeichnet, dass** zusätzlich eine Zeitgeber-Einrichtung vorgesehen ist, und die Mikroprozessor-Schaltung ausgelegt ist, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen, und zusätzlich ausgelegt ist, um abhängig von den Vorgaben des Lichtsensors den Beginn des Zeitfensters bei Unterschreiten eines vorgegebenen Helligkeitswertes seitens des von dem Lichtsensor gemessenen ambienten Tageslichtes vorzuverlegen und einen Einschaltvorgang auszulösen.

7. Mikroprozessor-Schaltung nach einem der Ansprüche 1 bis 6, **dadurch gekennzeichnet, dass** zusätzlich eine Zeitgeber-Einrichtung vorgesehen ist, und die Mikroprozessor-Schaltung ausgelegt ist, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen, und zusätzlich ausgelegt ist, um abhängig von den Vorgaben des Lichtsensors das Ende des Zeitfensters bei Unterschreiten eines vorgegebenen Helligkeitswertes seitens des von dem Lichtsensor gemessenen ambienten Tageslichtes zu verzögern und einen Ausschaltvorgang erst dann auszulösen, wenn der sensierte Helligkeitswert den vorgegebenen Helligkeitswertes übertrifft.

8. Mit einer Zeitgeber-Einrichtung gekoppelte Mikroprozessor-Schaltung zum Steuern sowohl eines Einschaltvorgangs als auch eines Ausschaltvorgangs der Leuchtelemente einer Verkehrsschild-Einrichtung mit einem Basispaneel mit einer mit einer grafischen Gestaltung gemäß einer genormten Vorgabe der STVO versehenen Oberfläche, im Bereich derer die Leuchtelemente untergebracht sind, wobei das Basispaneel mit einem Chassis verbunden ist, dessen Oberfläche mindestens teilweise mit Photovoltaik-Elementen zum Erzeugen von elektrischem Strom bei Tageslicht versehen ist und in dessen Inneren eine mit den Photovoltaik-Elementen elektrisch verbundene Stromspeicher-Einrichtung zur elektrischen Versorgung der Zeitgeber-Einrichtung, der Leuchtelemente und der Mikroprozessor-Schaltung untergebracht ist, **dadurch gekennzeichnet, dass** die Mikroprozessor-Schaltung ausgelegt ist, um zu Beginn eines vorgegebenen, sich innerhalb von 24 Stunden wiederholenden Zeitfensters einen Einschaltvorgang der Leuchtelemente auszulösen und um bei Ende des Zeitfensters einen Ausschaltvorgang der Leuchtelemente auszuführen.

9. Mikroprozessor-Schaltung nach Anspruch 8, **dadurch gekennzeichnet, dass** Anfang und Zeitdauer des Zeitfensters einstellbar sind.

10. Mikroprozessor-Schaltung nach einem der Ansprüche 8 oder 9, **dadurch gekennzeichnet, dass** die Zeitdauer des Zeitfensters auf zwischen 4 Stunden und 14 Stunden einstellbar ist.
